# EUROPEAN PATENT APPLICATION

(11) **EP 4 005 765 A1**
(43) Date of publication of application: **01.06.2022**
(21) Application number: 21211129.8
(22) Date of filing: 29.11.2021
(51) Int. Cl.: B29B 15/12

(54) **IMPREGNATION UNIT FOR FIBER ROVING**

(30) Priority: 30.11.2020 LU 102248
(71) Applicant: GRADEL, 5691 Ellange (LU)
(72) Inventor: Elsbury, Brad, Ellange (LU)
(74) Representative: Office Freylinger

(57) **Abstract**

An impregnation unit (10) for impregnating a fiber roving, comprising:
a housing (12) having an internal pathway (18) extending, along a feed direction (A1), between an inlet aperture (14) and an outlet aperture (16), wherein in use a fiber roving (15) is drawn through the pathway;
fiber spreading means (20), wetting means (30) and pressing means (40) arranged along the pathway to act upon the fiber roving passing through the pathway (18);
wherein the wetting means (30) include at least one soft porous body (32), which in use is soaked with liquid matrix material, the at least one soft porous body being arranged to be in contact with the moving fiber roving to apply liquid matrix material thereon; and
wherein the pressing means (40) are configured to force the applied matrix material into the fiber roving.

## Description

### Technical field

The invention generally relates to the field of fiber roving impregnation, and more particularly to an impregnation unit for impregnating fiber rovings.

### Background of the Invention

Multi-dimensional winding of fiber rovings is a manufacturing technique used in the making of structures and parts through continuous winding of rovings, maintained under tension, onto a mandrel by following a pre-determined placement pattern. Methods for the multi-dimensional winding of endless fiber rovings are known and are all basically subject to the same functional principle: a fiber roving is embedded in a matrix (i.e. impregnated) and continuously wound. Either a pre-impregnated roving can be used (dry winding), or an un-impregnated dry roving which is impregnated before or during the winding process (wet winding).

Pre-impreganted fiber rovings are known as TowPregs. TowPregs can be purchased from manufacturers ready for winding and are used for dry winding. The use of pre-impregnated rovings has several disadvantages. The rovings must be stored in a freezer and heated up to room temperature for winding. Furthermore, the pre-impregnated rovings have a limited shelf life. The user is always dependent on the manufacturer regarding the quality of the pre-impregnated rovings regarding a homogeneous distribution of the matrix in the roving. The possibility of use always depends on the qualification of the goods offered for specific applications such as space, aeronautics, automotive and medical.

With the use of wet winding, the mentioned dependencies and disadvantages are eliminated. Moreover, many different matrix materials can be combined with different fiber rovings. Basically, when using wet winding of rotationally symmetrical parts, the roving is passed through a bath of resin before winding. However, this procedure is not practicable for automated winding of three-dimensional components. Indeed, since the roving must be held under tension from the impregnation unit to the winding head, the freedom of movement of the robot is restricted and the risk of collision is increased. Moreover, perfect impregnation over longer distances cannot easily be guaranteed. Furthermore, the velocity of the roving is a variable parameter, which is difficult to control by pulling the roving through a bath.

### Object of the invention

It is an object of the present invention to provide an impregnation unit for use in the wet winding of fiber rovings, without the aforementioned disadvantages.

This problem is solved by an impregnation unit as claimed in claim 1.

### General Description of the Invention

According to the present invention, an impregnation unit for impregnating a fiber roving with a liquid matrix material comprises:
- a housing having an internal pathway extending, along a feed direction, between an inlet aperture and an outlet aperture, wherein in use a fiber roving is drawn through the pathway;
- fiber spreading means, wetting means and pressing means arranged along the pathway to act upon the fiber roving passing through the pathway.

It will be appreciated that the wetting means include at least one soft porous body, which in use is soaked with liquid matrix material and which is arranged to be in contact with the moving fiber roving to apply liquid matrix material thereon. Moreover, the pressing means are configured to force the applied matrix material into the fiber roving. Passing through the compressing means enhances the penetration of the matrix in the fiber roving, whereby a wet, matrix impregnated fiber roving exits the impregnation unit through the outlet aperture.

In the present text, the expression fiber roving (or simply roving) refers to a long and narrow bundle of fibers. Matrix (or matrix material) means any composition suitable for impregnating a fiber roving and binding the fibers together upon hardening / drying. The matrix is normally a mixture of resin and hardener, and possibly additives if any are needed for improving technical characteristics. Any of a variety of thermoplastic or thermoset polymers may be employed to form the polymer matrix. The matrix is normally a liquid matrix, i.e. the matrix can flow under gravity or under application of a pressure. It is to be understood that the term liquid matrix refers to the state of the matrix during the impregnation process; a low viscosity being preferred to facilitate impregnation. Some resins may be rubberlike at room temperature, but more liquid (lower viscosity) at the temperature used during the impregnation process. Matrix material comprising such a resin is to be understood as liquid matrix material. Moreover, matrixes consisting of colloidal or particulate suspensions are to be understood as liquid matrixes for the present text. At the time the matrix material is inside the impregnation unit, and used in the wet winding process the matrix is normally liquid; it will dry/harden after the fiber roving has been wound according to the desired design/application.

Hardening can occur at room temperature over time, but generally, the hardening is realized at higher temperatures in a curing oven. Typical temperature ranges are varying between 80 and 220°C depending on the application and type of resin.

The inventive concept of the present impregnation unit relies upon flowing of the matrix through the soft porous body to the fiber roving being conveyed through the pathway. This process ensures homogeneous impregnation of the roving regardless of the orientation of the impregnation unit. In other words, the impregnation unit is not sensitive to the vector direction and size induced by gravity and can be operated in any position and at any angle or combination of angles, such as e.g. upside down, vertical, horizontal, or overhead. The impregnation unit can also advantageously be operated in 0-gravity fields (e.g. space manufacturing).

Advantageously, the impregnation unit is adapted to impregnate all kinds of fiber rovings. Fiber rovings may be made from various types of fibers, such as carbon, glass, natural fibers like basalt, chamfer, beech wood and others. These fibers differ from each other by their physical properties, and by their possible applications. Moreover, the number of individual fibers of the roving varies according to the requirements. However, every type of fiber roving can be impregnated with the inventive impregnation unit. In other words, the present inventive impregnation unit is characterized by its versatility to master the process of impregnation independently of the fiber roving fed in, and to provide an impregnated fiber with the highest quality. Advantageously, with the present invention, rovings can be impregnated with a fiber count of at least 1000, such as 1000, 2000, 3000, 6000, 8000, 12000, 16000, 24000 or 50000 fibers, or even more fibers. The fibers are generally of great length, e.g. in the order of kilometers, and one may thus refer to endless fiber rovings. It is to be noted that the length of the fiber roving generally depends on the thickness of the fibers forming the fiber roving and on the size of the bobbin supporting the roving. The impregnation unit is also adapted to operate with any kind of matrix, so that miscellaneous types of resins can be used.

The inventive impregnation unit is able to impregnate any kind of fiber roving with any kind of matrix. The general ratio of matrix to roving is adjustable, depending on the respective process parameters (e.g. fiber size and number, viscosity of matrix) and the ratio required by the latter application of the impregnated fiber roving.

As will be seen, the present impregnation unit can be of very compact design, thus allowing use thereof in a reduced space without risking collision with its surroundings. This if of particular interest where the impregnation unit is mounted on a mobile member, e.g. on an industrial robot arm. Alternatively, the impregnation may be arranged in a fixed position during its use.

In embodiments, the spreading means and wetting means are positioned with respect to one another such that the fiber roving is forced onto the at least one soft porous body. The forced contact between the fiber roving and the soft porous body advantageously improves the wetting of the fiber roving by the matrix.

Preferably, the fiber spreading means include a spreading surface, and the spreading surface has a convex shape when seen along the feed direction, to cause spreading of the fibers of the fiber roving. In other embodiments, the fiber spreading means include a roller, which presents a convex shape when seen along the feed direction. The convex shape ensures that the fibers of the fiber roving are spread out transversally to the feed direction, improving the quality and the homogeneity of their wetting by the matrix.

Advantageously, the at least one soft porous body and the spreading surface may be situated opposite to one another in the pathway, and the convex spreading surface is configured such that its apex region bears against the soft porous body.

Preferably, the convex surface may be configured to exert a compressive force on the soft porous body. In such embodiments, the fiber roving passing between the soft porous body and the spreading surface is pressed against the soft porous body by the apex of the spreading surface, thus improving the wetting of the fiber roving.

In embodiments, the at least one soft porous body is arranged in a recess in the pathway, and a first matrix feed channel opens in the recess to deliver liquid matrix to the at least one soft porous body. Preferably, the first matrix feed channel opens in the recess at a location facing the apex of the convex spreading surface. Feeding matrix to the soft porous body during operation of the impregnation unit ensures a permanent soaking thereof. Moreover, the opening position of the feed channel allows matrix delivery to the soft porous body near the location where the fiber roving is pressed thereon, thus improving the transfer of matrix to the fiber roving and its wetting.

In embodiments, the impregnation unit comprises a second matrix feed channel opening in the apex region of the convex spreading surface. This allows applying matrix on both sides of the fiber roving, thereby improving the wetting and resulting impregnation of the fiber roving.

In embodiments, the first and second feed channels have substantially aligned outlet openings.

Preferably, the at least one soft porous body is a block of sponge-like material. Any kind of sponge-like material can be used, such as but without being limited to a natural or synthetic sponge. The sponge-like material is selected to have an open porosity allowing for the matrix to flow therethrough. The porous body is soft in the sense that it does not offer a hard contact to the passing fiber roving (avoiding damaging the latter), can be adapt to shape variations, and can be deformed by the spreading surface of the fiber spreading means.

In embodiments, the pressing means are configured to cause local deviation of the fiber roving. Preferably, the pressing means form a baffle section. In this section, the pathway for the fiber roving could be described as a serpentine pathway, causing local deviations of the wet fiber roving, whereby the matrix is pressed into the roving on both sides thereof due to contact with the baffle means.

In embodiments, the pressing means comprise three wiper members (or simply wipers) that are spaced along the pathway. A first and a third wiper member have respective wiping surfaces positioned to be in contact with one side of the fiber roving, whereas the second wiper member, located in-between the first and third wiper member, protrudes so that its wiping surface deflects the fiber roving from a straight line between the first and third wiper members. The wipers press the matrix into the roving after the liquid matrix has been applied upstream and remove excess matrix from the wet roving. The wipers are arranged in such a way that the impregnated roving is pulled along them one after the other to contact them with both its sides. In other words, the matrix is pressed into the roving by the pressure the wipers exert on the roving. Simultaneously, excess material is stripped off. Advantageously, the first and third wiper members may delimit a cavity to collect the stripped-off excess matrix. Preferably, the cavity presents an outlet opening at its bottom.

In embodiments, the housing comprises a first housing portion defining one part of the pathway and comprising the spreading means and the first and a third wiper as well as the cavity; and a second housing portion defining the other part of the pathway and comprising the recess with the soft porous body and the second wiper.

Advantageously, the first and second housing portions may be pivotably connected to one another, in particular about an axis located in the vicinity of the outlet aperture. The fiber roving may thus be inserted faster and more easily in the impregnation unit. This may also facilitate maintenance operation, such as e.g. cleaning or changing the fiber spreading means, the wetting means and/or the pressing means.

In embodiments, the wetting means include a second soft porous body arranged to be in contact with the fiber roving. The two soft porous bodies are situated opposite to one another in the pathway and preferably facing each other. The second soft porous body is preferentially arranged in a second recess in the pathway of the impregnation unit, and a third matrix feed channel opens in this recess to deliver liquid matrix to the second soft porous body. In practice, the second soft porous body with the second recess and third feed channel may be arranged in the first housing portion. In such embodiments, the fiber roving contacts soft porous bodies with both sides, so that matrix flowing through the two soft porous bodies is applied on both sides of the fiber roving. The wetting and subsequent impregnation of the fiber roving is thus improved.

According to another aspect, the invention concerns an industrial robot comprising an impregnation unit as described herein. In embodiments, the industrial robot is a vertical articulated robot with a serial link structure and the impregnation unit is positioned on the 6^{th} axis of the industrial robot. Indeed, as the impregnation unit can be operated in any position at any angle or combination of angles, e.g. upside down, overhead, vertical, or horizontal, and presents a very compact design, it can advantageously be mounted and operated on the 6th axis of an industrial robot with a reduced risk for collision with surroundings (e.g. winding tool). In embodiments wherein the housing of the impregnation unit comprises two housing portions, the first portion is preferably installed fixed on the industrial robot while the second part is pivotable.

In embodiments, the industrial robot further comprises a pump connected by a hose to the first and/or second matrix feed channel. The pump is preferably configured to pump a liquid matrix from a supply source to the impregnation unit. In same or other embodiments, the industrial robot further comprises a vacuum pump connected by a vacuum hose to the exit opening of the cavity delimited by the first and third wiper members. Matrix could therefore be continuously provided to the at least one soft porous body to ensure its permanent soaking and a homogeneous impregnation of the fiber roving. Moreover, stripped off excess matrix could be more efficiently evacuated, limiting its accumulation in the impregnation unit.

In embodiments, a motorized feeder and/or a guiding nozzle may be mounted near the outlet aperture of the impregnation unit via an integrated interface.

### Brief Description of the Drawings

Further details and advantages of the present invention will be apparent from the following detailed description of not limiting embodiments with reference to the attached drawings, wherein:
Fig.1 A) and B) are perspective and standard schematic section views of an impregnation unit according to a first embodiment of the present invention, in an operating position;
Fig.2 is a schematic view of the impregnation unit of Fig.1 in a maintenance position;
Fig.3 is a schematic view of an impregnation unit according to a second embodiment of the present invention in an operating position; and
Fig.4 is a schematic view of the impregnation unit of Fig.3 in a maintenance position.

### Description of Preferred Embodiments

An impregnation unit 10 generally comprises a housing 12 with an inlet aperture 14, an outlet aperture 16, and an internal pathway 18 extending inside the housing 12 from the inlet aperture 14 to the outlet aperture 16. A fiber roving 15 (i.e. a bundle of fibers) to be impregnated with a liquid matrix is fed into the impregnation unit 10 via the inlet aperture 14, progresses through the pathway 18 and exits the latter via the outlet aperture 16. The fiber bundle normally enters the impregnation unit in a dry state, and exits through the outlet aperture wet, impregnated with the matrix, ready to be applied / wound to form a structure.

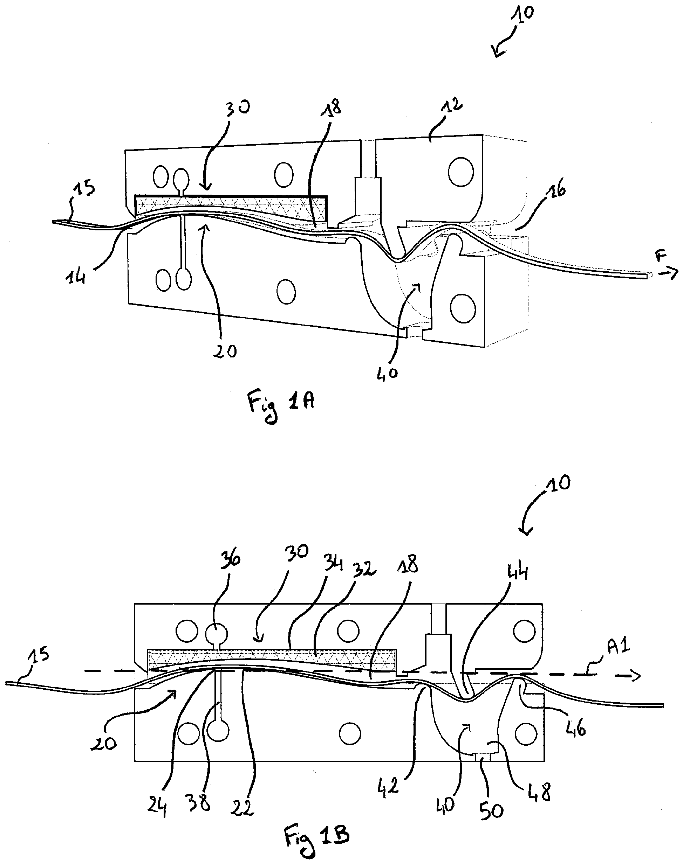

In practice, a pulling force F (Fig. 1A) is exerted on the fiber roving 15 at the outlet side, whereby the fiber roving 15 is drawn through the pathway 18 along a so-called feed direction A1, thus from left to right in Fig.1. The pulling force F is due either to the movement of the impregnation unit 10 relative to the object/structure (not shown) on which the fiber roving is applied, or to movement of the object, or a combination of both.

The fiber roving 15 is thus guided under tension through the pathway 18, which forms a guiding passage with various sections designed for different functionalities. Therefore, the impregnation unit 10 comprises fiber spreading means 20, wetting means 30 and pressing means 40 that are arranged along the pathway 18. The pressing means 40 are arranged downstream of the fiber spreading means 20 and the wetting means 30 along the feed direction A1. The wetting means are configured for applying the matrix to the fiber roving 15, and are also named matrix applying means 30.

In the described embodiment, the pathway 18 presents an essentially rectangular cross-section and generally extends along a plane aligned with the feed direction A1 of the fiber roving 15 inside the impregnation unit 10. As will be described, the pathway 18 is however not planar but remains along the feed direction A1.

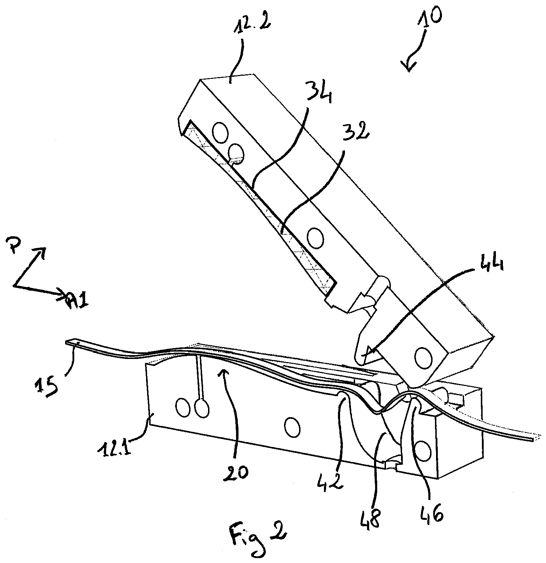

A first embodiment of the present impregnation unit 10 will now be explained in detail with regard to Figures 1 and 2. The spreading means 20 include a spreading surface 22 having a convex shape when seen along the feed direction A1 and causing the spreading of the individual fibers of the roving when the roving is conveyed over the spreading surface 22. In contact with the spreading surface 22, the fiber roving 15 thus spreads out laterally, taking a relatively planar form, similar to a web, this until the fiber roving exits the pressing means 40. The fiber roving 15 thus spreads out transversally to the feed direction A1.

The geometry of the spreading surface 22 such as, e.g., its length and its curvature radius (or radii) depends on several factors, including the used roving material and the number of individual fibers, and is easily adaptable by a skilled person. The spreading surface 22 is however configured such that its apex region 24 advantageously protrudes from the substantially straight line formed by the feed direction A1 (Fig.1B).

The matrix applying means 30 comprise a soft porous body 32 arranged in a recess 34 in the pathway 18 and soaked with matrix material. The porous body 32 is positioned along the pathway 18 to be in contact with the fiber roving 15. Advantageously, the soft porous body 32 is a block of sponge-like material. A synthetic or natural sponge can be used, or any like material being compressible/elastic and having open porosity capable of flowing the matrix material towards the fiber roving. A first matrix feed channel 36 opens in the recess 34 accommodating the porous body 32 in order to deliver liquid matrix to this porous body 32, permitting soaking thereof with the liquid matrix.

In the present embodiment, the porous body 32 is situated opposite to the convex spreading surface 22 and the apex 24 of the spreading surface 22 compresses the soft porous body 32. The portion of the pathway 18 located between the spreading surface 22 and the soft porous body 32 is thus very thin. Indeed, the apex 24 of the spreading surface 22 compresses the porous body 32, so that only the fiber roving 15 passes therethrough, without free space therebetween. The resulting close contact between the porous body 32 and the fiber roving 15 causes the application of liquid matrix from the porous body 32 onto the fiber roving 15, which is thus wetted / impregnated with the matrix.

Preferably, the first matrix feed channel 36 is arranged to open in the recess 34 at a position along direction A1 in the vicinity of the apex region 24 of the convex spreading surface 22. The matrix applying means 30 further preferably include a second matrix feed channel 38, which opens into the pathway in the apex region of the convex spreading surface 22. The first and second feed channels 36, 38 thus have substantially aligned outlet openings. As matrix is applied from both sides of the pathway 18, both sides of the fiber roving 15 are wetted with matrix material.

The pressing means 40 comprise three successive wipers 42, 44, 46 spaced along the pathway 18 and forming a baffle section. The wipers are formed as bars protruding in the pathway 18. They extend over the width of the pathway 18 and have a rounded end surface in contact with the roving 15. The wipers preferably have a cross-section in form of a semi-circle or a U when seen in a direction perpendicular to the feed direction A1. The wipers are generally made from a more rigid material than the one forming the soft porous body. The housing and wipers may be formed in one piece (Fig.1). The housing may generally be made from metallic material, e.g. steel or aluminium alloy.

In general, the configuration/geometry of the wipers 42, 44, 46 may be adjusted taking into account several factors, such as e.g. the viscosity of the matrix and the desired minimum and maximum operating speed at which the fiber roving 15 is conveyed through the impregnation unit 10, which can advantageously be varied between 0.25 and 40 m/min.

The wipers 42, 44, 46 press the matrix into the roving 15 after the liquid matrix has been applied upstream and remove excess matrix from the wet roving. They thus enhance the penetration / impregnation of the matrix in the roving 15. The wipers 42, 44, 46 are arranged in such a way that the wet roving is pulled along them one after the other to contact them with both its sides. The first 42 and third 46 wipers have a wiping surface positioned to be in contact with one side of the fiber roving 15 and the second wiper member 44, located in between the first 42 and third 46 wipers, protrudes so that its wiping surface deflects the fiber roving 15 from a straight line between the first 42 and third 46 wipers.

Preferably, the first 42 and third 46 wipers delimit a cavity 48 for collecting stripped-off excess matrix. The cavity 48 also comprises an outlet opening 50, which may be connected to a vacuum pump through a vacuum hose (not shown).

It may be noted that in embodiment of Fig.1A and Fig.1B, the convex spreading surface 22 is flat in the width direction of the passageway (or pathway 18), i.e. in the direction perpendicular to the drawing sheet. That is the spreading surface 22 is generated by a straight generatrix perpendicular to the drawing sheet (Fig.1B). The profiles of the wipers 42-46 are also generated by a straight generatrix perpendicular to the drawing sheet. In alternative embodiments, the convex spreading surface 22 may be also convex in the width direction of the passageway, to further enhance the spreading effect on the fiber roving.

The housing 12 of the impregnation unit 10 presents a generally closed rectangular shape with an inlet side, an outlet side, an upper side, a lower side and two lateral sides. The inlet side comprises the inlet aperture 14 while the outlet side comprises the outlet aperture 16. The lower side comprises the outlet opening 50 of the cavity 48 formed by the wipers 42, 46, and the upper side is opposed to the lower side. The upper, lower and lateral sides enclose the internal pathway 18 for the fiber roving 15. At least one of the lateral sides preferably comprises openings for connecting the matrix feed channels 36, 38 to a matrix supply source (not shown).

Preferably, the housing 12 of the impregnation unit 10 comprises two portions (Fig.2). The first portion 12.1 defines one part of the pathway 18 and comprises the fiber spreading means 20, the first 42 and third 46 wipers and the cavity 48 for the excess matrix. The second portion 12.2 defines the other part of the pathway 18 and comprises the second wiper 44 as well as the soft porous body 32. The two housing portions 12.1, 12.2 are pivotably connected to one another about an axis P perpendicular to the feed direction A1 and located near the outlet aperture 16. When the impregnation unit 10 is mounted on an industrial robot, the first portion 12.1 of the housing is advantageously fixedly mounted to the robot with the second housing portion 12.2 pivotable around the axis P.

Such an impregnation unit 10 can be used in an impregnation process to impregnate a fiber roving 15 with a matrix. First, the impregnation unit 10 is opened to ensure an easy and fast insertion of the fiber roving 15 at the beginning of the process, and closed. Then, the fiber roving 15 is conveyed under tension along the pathway 18 provide inside the impregnation unit 10 by means of a motorized feeder (not shown). The convex spreading surface 22 spreads the fibers while simultaneously pushing them against the soft porous body 32 soaked with the matrix, thanks to its apex 24 compressing the porous body 32. In other words, the fiber roving 15 is simultaneously spread and wetted with matrix.

Matrix is continuously pumped from a supply source through the feeding channels 36, 38 to the porous body 32 and the convex spreading surface 22, before flowing through the porous body, so that it is always soaked with matrix. This ensures a homogenous and steady impregnation of the fiber roving 15. Transfer of the matrix from the porous body 32 to the fiber roving 15 occurs through the pressure resulting from compression of the porous body 32 by the convex spreading surface 22. Moreover, the pressure and flow rate at which the matrix is pumped is preferably controlled in such a way that it is in constant ratio to the conveying speed of the fiber roving 15, also improving the homogeneity and steadiness of the impregnation. Finally, the matrix is pressed into the fiber roving by the pressure the wipers 42, 44, 46 exert on the roving 15. If the roving has been wetted with too much matrix, excess matrix is stripped off. The stripped-off excess matrix is collected in the cavity 48 delimited by the first 42 and the third 46 wipers, and drained by a vacuum pump connected by a vacuum hose (not shown) to the exit opening 50. The impregnated fiber roving 15 exits the impregnation unit 10 through the outlet aperture 16. The impregnation unit 10 can then be opened, either for maintenance operations, such as cleaning the spreading surface 22 and the wipers 42, 44, 46, and possibly changing the soft porous body 32, or to position a new fiber roving 10.

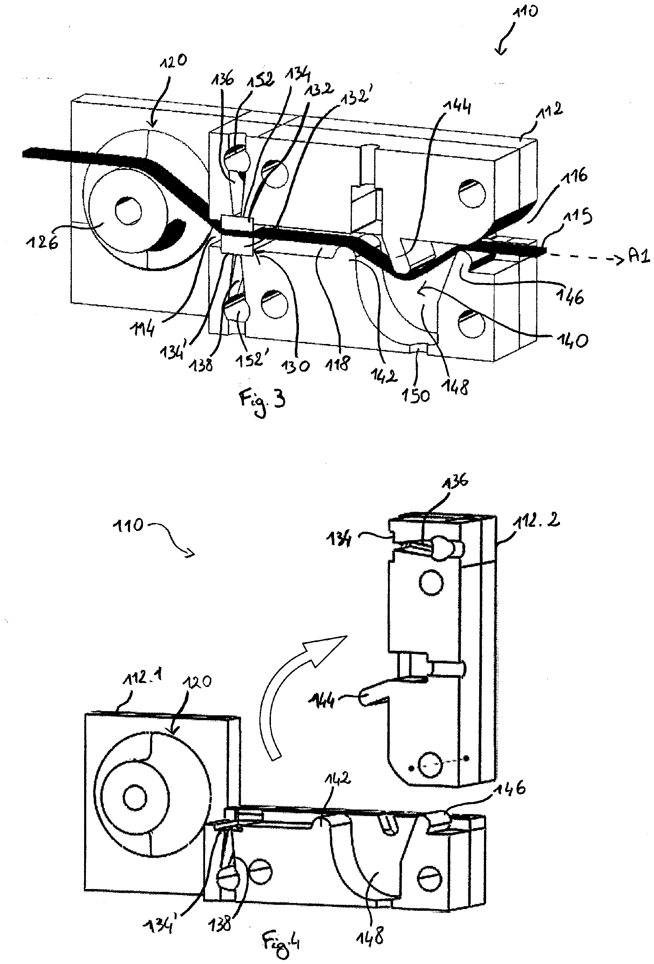

Another embodiment of the present inventive impregnation unit will now be explained in detail with regard to the figures 3 and 4. Some elements of this second embodiment are similar to the corresponding ones of the first embodiment described above and will be designated by the same reference signs increased by 100.

According to this second embodiment, the fiber spreading means 120 comprise a convex roller 126 (Fig.3), positioned near the inlet aperture 114 of the impregnation unit 110. When seen along the feed direction A1, the roller 126 presents a convex shape causing spreading of the individual fibers of the roving 115. The geometry of the convex roller 126, such as e.g. its radius, is to be adapted depending on several factors, including the used roving material and the number of individual fibers, and is easily adaptable by a skilled person. Advantageously, the roller 126 is detachably mounted in the impregnation unit 110 and can be removed and exchanged depending on the fiber roving 115 to impregnate. This ensures an optimum processing of all types of fiber rovings. The roller 126 being detachable, it can also be more easily cleaned and reused.

In this embodiment, the matrix applying means (or wetting means) 130 are positioned downstream of the fiber spreading means 120 along the feed direction A1. The matrix applying means 130 comprise two soft porous bodies 132, 132', each one of them being soaked with matrix, and situated opposite to one another in the pathway 118. Each one of the porous bodies 132, 132' is arranged inside a recess 134, 134' in the pathway 118 and they are positioned on top of each other and in close contact with one another. As for the first embodiment, a synthetic or natural sponge can be used, or any suitable porous compressible material.

As the two soft porous bodies 132, 132' contact each other, the portion of the pathway in this section is thus very thin, and only the fiber roving can pass therebetween. The resulting close contact between the porous bodies 132, 132' and the fiber roving 115 causes the matrix soaking the porous bodies 132, 132' to wet the fiber roving 115.

The matrix applying means 130 further comprise two matrix storage cavities 152, 152' and two matrix feed channels 136, 138. Each one of the feed channel 136, 138 is arranged to start from one of the storage cavities 152, 152' and to open in one of the recesses 134, 134' receiving a soft porous body 132, 132', so that matrix flows from the storage cavities 152, 152' to the porous bodies 132, 132' through the feed channels 136, 138, and then through the porous bodies 132, 132' to the fiber roving 115. Each one of the matrix storage cavities 152, 152' can be connected to a pump through a hose to feed matrix thereto from a matrix supply source (not shown).

The general ratio of matrix to roving is adjustable, e.g. depending on the respective process parameters (such as fiber size and number, viscosity of the matrix).

The pressing means 140 comprise three round shaped wipers 142, 144, 146 forming a baffle section, similar to the first embodiment

As for the first embodiment, the housing 112 of the impregnation unit 110 presents a generally rectangular shape. The housing 112 is very similar to the one previously described and will not be detailed again. However, according to this embodiment, the openings for connecting the matrix feed channels 136, 138 to a matrix supply source are provided on the upper and lower sides of the housing 112, and not on a lateral side. These openings are arranged to open in the cavities 152, 152'.

Preferably, the housing 112 of the impregnation unit 110 according to second embodiment comprises two portions 112.1, 112.2, or halves (Fig.4) similar to the ones of the first embodiment. In this embodiment, one soft porous body 132' is arranged in a recess 134' comprised in the first portion 112.1 of the housing, while the other soft porous body 132 is arranged in a recess 134 comprised in the second portion 112.2 of the housing.

While the invention has been illustrated and described in detail in the drawings and foregoing description, such illustrations and description are to be considered illustrative or exemplary and not restrictive; the invention is not limited to the disclosed embodiments.

## Claims

1. An impregnation unit for impregnating a fiber roving (15, 115), comprising:
a housing (12, 112) having an internal pathway (18, 118) extending, along a feed direction (A1), between an inlet aperture (14, 114) and an outlet aperture (16, 116), wherein in use a fiber roving (15, 115) is drawn through the pathway;
fiber spreading means (20, 120), wetting means (30, 130) and pressing means (40, 140) arranged along the pathway to act upon the fiber roving passing through the pathway (18, 118);
wherein the wetting means (30, 130) include at least one soft porous body (32, 132), which in use is soaked with liquid matrix material, the at least one soft porous body (32, 132) being arranged to be in contact with the moving fiber roving (15, 115) to apply liquid matrix material thereon; and
wherein the pressing means (40, 140) are configured to force the applied matrix material into the fiber roving.

2. The impregnation unit according to claim 1, wherein the spreading means (20, 120) and wetting means (30, 130) are positioned with respect to one another such that the fiber roving (15, 115) is forced onto the at least one soft porous body (32, 132).

3. The impregnation unit according to claim 1 or 2, wherein the fiber spreading means (20) include a spreading surface (22), the spreading surface (22) having a convex shape to cause spreading of the fibers of the fiber roving (15); the spreading surface (22) being convex when seen along the feed direction (A1) and/or transversally thereto.

4. The impregnation unit according to claim 3, wherein the at least one soft porous body (32) and the spreading surface (22) are situated opposite to one another in the pathway (18), and the convex spreading surface (22) is configured such that its apex region (24) bears against the soft porous body (32).

5. The impregnation unit according to any one of the preceding claims, wherein said at least one soft porous body (32, 132) is arranged in a recess (34, 134) in the pathway, and a first matrix feed channel (36, 136) opens in the recess (34, 134) to deliver liquid matrix to the at least one soft porous body (32, 132);
and preferably wherein said first matrix feed channel (36) opens in said recess (34) at a location facing the apex (24) of the convex spreading surface (22).

6. The impregnation unit according to any one of claims 3 to 5, wherein a second matrix feed channel (38) opens in the apex region (24) of the convex spreading surface (22);
and preferably wherein the first and second feed channels (36, 38) have substantially aligned outlet openings.

7. The impregnation unit according to any one of the preceding claims, wherein the at least one soft porous body (32, 132) is a block of sponge-like material.

8. The impregnation unit according to any one of the preceding claims, wherein the pressing means (40, 140) are configured to cause local deviation of the fiber roving (15, 115).

9. The impregnation unit according to any one of the preceding claims, wherein the pressing means (40, 140) form a baffle section.

10. The impregnation unit according to any one of the preceding claims, wherein the pressing means (40, 140) comprise three wiper members (42, 44, 46; 142, 144, 146) that are spaced along the pathway, a first (42, 142) and a third (46, 146) wiper member having respective wiping surfaces positioned to be in contact with one side of the fiber roving (15, 115), whereas the second wiper member (44, 144), located in-between the first and third wiper member, protrudes so that its wiping surface deflects the fiber roving (15, 115) from a straight line between the first and third wiper members (42, 46; 142, 146); and preferably wherein said first and third wiper members (42, 46; 142, 146) delimit a cavity (48, 148) with an outlet opening (50, 150).

11. The impregnation unit according to claim 10, wherein the housing (12, 112) comprises:
a first housing portion (12.1, 112.1) defining one part of the pathway (18, 118) and comprising the spreading means (20, 120) and the first and a third wiper members (42, 46; 142, 146) as well as the cavity (48, 148); and
a second housing portion (12.2, 112.2) defining the other part of the pathway (18, 118) and comprising the recess (34, 134) with the soft porous body (32, 132) and the second wiper (44, 144);
and preferably wherein the first and second housing portions (12.1, 12.2; 112.1, 112.2) are pivotably connected to one another, in particular about an axis (P) located in the vicinity of the outlet aperture (14, 114).

12. The impregnation unit according to any one of the preceding claims, wherein the wetting means (130) include a second soft porous body (132') arranged to be in contact with the fiber roving (115), the two soft porous bodies (132, 132') being situated opposite to one another in the pathway (118) and preferably facing each other;
and preferably wherein the second soft porous body (132') is arranged in a second recess (134') in the pathway (118), and a third matrix feed channel (138) opens in said recess (134') to deliver liquid matrix to the second soft porous body (132').

13. The impregnation unit (110) according to claim 12, wherein the fiber spreading means (120) include a roller (126) arranged upstream of the soft porous bodies (132, 132').

14. An industrial robot comprising an impregnation unit (10, 110) as claimed in any one of the preceding claims, the impregnation unit being preferably positioned on the 6^{th} axis of the industrial robot.

15. The industrial robot of claim 14, further comprising a pump connected by a respective hose to either of the matrix feed channels (36, 38, 136, 138) and configured to pump liquid matrix from a supply source to the impregnation unit; and/or further comprising a vacuum pump connected by a vacuum hose to the outlet opening (50, 150) of the cavity (48, 148).
